# EUROPÄISCHE PATENTSCHRIFT

(11) **EP 1 150 369 B1**
(45) Veröffentlichungstag und Bekanntmachung des Hinweises auf die Patenterteilung: **02.07.2003**
(21) Anmeldenummer: 00109276.6
(22) Anmeldetag: 28.04.2000
(51) Int. Cl.: H01M 4/96

(54) **Gasverteilerstrukturen und Gasdiffusionselektroden für Polymerelektrolyt-Brennstoffzellen**
Gas distributor structure and gas diffusion electrodes for polymer electrolyte fuel cells
Structures de distributeurs de gaz et électrodes à diffusion gazeuze pour des piles à combustible

(43) Veröffentlichungstag der Anmeldung: 31.10.2001
(73) Patentinhaber: OMG AG & Co. KG, 63457 Hanau (DE)
(72) Erfinder: Zuber, Ralf Dr., 63762 Grossostheim (DE); Bayer, Armin, 63579 Freigericht (DE); Fehl, Knut, 36381 Schlüchtern-Ramholz (DE); Bänisch, Volker, 63526 Erlensee (DE); Lehmann, Thomas Dr., 63505 Langenselbold (DE)
(74) Vertreter: Stellbrink, Axel

(56) Entgegenhaltungen:
- EP-A- 0 869 568
- EP-A- 0 928 036
- US-A- 4 564 427
- WILSON M.S. ET AL: 'LOW PLATINUM LOADING ELECTRODES FOR POLYMER ELECTROLYTE FUEL CELLS FABRICATED USING THERMOPLASTIC IONOMERS' ELECTROCHIMICA ACTA Bd. 40, Nr. 3, 1995, Seiten 355 - 363

## Beschreibung

Die Erfindung betrifft Gasverteilerstrukturen und Gasdiffusionselektroden für Brennstoffzellen, insbesondere PEM-Brennstoffzellen, bei denen ein festes Polymer als Elektrolyt eingesetzt wird.

Brennstoffzellen wandeln einen Brennstoff und ein Oxidationsmittel örtlich voneinander getrennt an zwei Elektroden in Strom, Wärme und Wasser um. Als Brennstoff kann Wasserstoff oder ein wasserstoffreiches Gas, als Oxidationsmittel Sauerstoff oder Luft dienen. Der Vorgang der Energieumwandlung in der Brennstoffzelle zeichnet sich durch einen besonders hohen Wirkungsgrad aus. Aus diesem Grunde gewinnen Brennstoffzellen in Kombination mit Elektromotoren zunehmend Bedeutung als Alternative für herkömmliche Verbrennungskraftmaschinen.

Die sogenannte Polymerelektrolyt-Brennstoffzelle (PEM-Brennstoffzelle) eignet sich aufgrund ihrer kompakten Bauweise, ihrer Leistungsdichte sowie ihres hohen Wirkungsgrades für den Einsatz als Energiewandler in Elektroautomobilen.

Die PEM-Brennstoffzelle besteht aus einer stapelweisen Anordnung ("Stack") von Membran-Elektrodeneinheiten (MEE), zwischen denen bipolare Platten zur Gaszufuhr und Stromleitung angeordnet sind. Eine Membran-Elektrodeneinheit besteht aus einer Polymerelektrolyt-Membran, die auf beiden Seiten mit Reaktionsschichten, den Elektroden, versehen ist. Eine der Reaktionsschichten ist als Anode für die Oxidation von Wasserstoff und die zweite Reaktionsschicht als Kathode für die Reduktion von Sauerstoff ausgebildet. Auf die Elektroden werden sogenannte Gasverteilerstrukturen aus Kohlefaserpapier oder Kohlevlies aufgebracht, die einen guten Zugang der Reaktionsgase zu den Elektroden und eine gute Ableitung des Zellenstroms ermöglichen. Anode und Kathode enthalten sogenannte Elektrokatalysatoren, die die jeweilige Reaktion (Oxidation von Wasserstoff beziehungsweise Reduktion von Sauerstoff) katalytisch unterstützen. Als katalytisch aktive Komponenten werden bevorzugt die Metalle der Platingruppe des Periodensystems der Elemente eingesetzt. In der Mehrzahl werden sogenannte Trägerkatalysatoren verwendet, bei denen die katalytisch aktiven Platingruppenmetalle in hochdisperser Form auf die Oberfläche eines leitfähigen Trägermaterials aufgebracht wurden. Die mittlere Kristallitgröße der Platingruppenmetalle liegt dabei etwa zwischen 1 und 10 nm. Als Trägermaterialien haben sich feinteilige Ruße bewährt.

Die Polymerelektrolyt-Membran besteht aus Protonen leitenden Polymermaterialien. Diese Materialien werden im folgenden auch kurz als Ionomer bezeichnet. Bevorzugt wird ein Tetrafluorethylen-Fluorvinylether-Copolymer mit Säurefunktionen, insbesondere Sulfonsäuregruppen, verwendet. Ein solches Material wird zum Beispiel unter dem Handelsnamen Nafion® von E.I. DuPont vertrieben. Es sind jedoch auch andere, insbesondere fluorfreie Ionomermaterialien, wie sulfonierte Polyetherketone oder Arylketone oder Polybenzimidazole einsetzbar.

Für den breiten kommerziellen Einsatz von PEM-Brennstoffzellen in Kraftfahrzeugen ist eine weitere Verbesserung der elektrochemischen Zellenleistung sowie eine deutliche Verminderung der Systemkosten notwendig.

Eine wesentliche Voraussetzung für eine Steigerung der Zellenleistung ist eine optimale Zu- und Abfuhr der jeweiligen Reaktivgasmischungen zu und von den katalytisch aktiven Zentren der Katalysatorschichten. Neben der Zufuhr von Wasserstoff zur Anode muss das Ionomermaterial der Anode ständig durch Wasserdampf (Befeuchtungswasser) befeuchtet werden, um eine optimale Protonen-Leitfähigkeit zu gewährleisten. Das an der Kathode gebildete Wasser (Reaktionswasser) muss kontinuierlich abgeführt werden, um eine Flutung des Porensystems der Kathode und damit eine Behinderung der Versorgung mit Sauerstoff zu vermeiden.

Die US-PS 4,293,396 beschreibt eine Gasdiffusionselelektrode, die aus einem offenporigen, leitfähigen Kohlefasergewebe besteht. Eine homogene Mischung aus katalysierten Kohlenstoffpartikeln und hydrophoben Partikeln eines Bindermaterials ist gleichmäßig über das Kohlefasergewebe verteilt und in die offenen Poren eingebracht.

Die US-PS 4,564,427 beschreibt eine Kathode mit einer Barrieren-Schicht für eine elektrochemische Zelle. Die Kathode besteht aus einem Kohlefasersubstrat, welches auf einer Oberfläche mit der Barrieren-Schicht versehen ist, die aus einer Mischung von Ruß und PTFE besteht. Die Porengröße dieser Schicht wird mit 0,2 bis 0,5 µm angegeben. Sie dient als Unterlage für die Kathodenschicht.

Die deutsche Offenlegungsschrift DE 195 44 323 A1 stellt eine Gasdiffusionselektrode für Polymerelektrolyt-Brennstoffzellen vor, die ein Kohlefaservlies enthält, das mit einer Mischung aus einer Ruß-Suspension und einer Polytetrafluorethylen-Suspension beschichtet und anschließend gesintert ist.

In der EP 0 869 568 wird eine Gasverteilerstruktur beschrieben, die aus einem Kohlefasergewebe besteht, das auf der der Katalysatorschicht zugewandten Seite mit einer Beschichtung aus Ruß und einem Fluorpolymer versehen wurde.

Die in der US-PS 4,293,396, der DE 195 44 323 A1 und der EP 0 869 568 beschriebenen Gasdiffusionselektroden und Gasverteilerstrukturen sind stark hydrophob und werden durch Befeuchtungs- und Reaktionswasser nicht geflutet. Allerdings wird durch die Füllung der Makroporen der gesamten Schicht mit einer Masse aus Ruß und Polytetrafluorethylen (PTFE) der freie Zutritt der Reaktivgasmischungen zur Katalysatorschicht deutlich behindert. Dies führt zu niedrigen Leistungswerten im Betrieb mit verdünnten Gasen, wie Luft und Reformatgas, insbesondere bei niedriger Stöchiometrie, das heißt hoher Gasausnutzung.

In der kanadische Patentanmeldung CA 2,052,221 wird ein hydrophobes, poröses und gleichzeitig elektrisch leitfähiges Material beschrieben, das aus einem porösen und elektrisch leitfähigen, blattförmigen Material und einem hydrophoben Polymer besteht, das in das blattförmige Material durch Imprägnieren eingebracht wird. Der Anteil des Polymers beträgt 2 bis 14 Gew.- %.

In der WO 97/13287 wird eine elektrochemische Zelle beschrieben, die eine Gasverteilerstruktur beinhaltet, die aus zwei Schichten besteht, wobei die Poren der ersten Schicht kleiner sind als die der zweiten Schicht und die zweite Schicht eine Porosität von mindestens 82 % und eine mittlere Porengröße von mindestens 10 µm aufweist. Ebenfalls wird eine nicht gewebte Gasverteilerstruktur beschrieben deren zweite Schicht eine Porosität von mindestens 50 % und eine mittlere Porenweite von 35 µm aufweist. Die Porengröße der feinporigen Schicht wird mit 0,1 - 10 µm und ihre Porosität mit wenigstens 10 % angegeben.

Die in der WO 97/13287 beschriebenen Gasverteilerstrukturen erleiden besonders im Betrieb mit befeuchteten Reaktivgasen bei hoher Stromdichte, niedrigem Reaktivgasdruck und niedriger Stöchiometrie Leistungseinbrüche durch Flutung der Gasverteilerstrukturen mit Reaktiv- oder Befeuchtungswasser.

Die EP 0 928 036 A1 beschreibt eine elektrokatalysche Gasdiffusionselektrode auf der Basis eines Kohlefasergewebes. Eine oder beide Oberflächen des Kohlefasergewebes sind mit ein oder meheren mikroporösen Schichten aus verschiedenen Mischungen von Ruß und PTFE beschichtet.

In der WO 99/56335 wird eine Unterstützungsschicht beschrieben, die den gleichzeitigen Transport von Gasen und Flüssigkeiten erleichtern soll. Sie besteht aus einem porösen Kohlefasersubstrat, das 75-95% hydrophobes Porenvolumen und 5-25% hydrophile Poren aufweist. Beide Anteile liegen in einer Schicht vermischt vor und stehen in direktem Kontakt. Auch hier sind Poren mit großer Porenweite von einigen 10 µm vorhanden, die bei starkem Anfall von Produktwasser oder bei starker Befeuchtung geflutet werden. Dies führt vor allem bei hoher Stromdichte zu Gastransportproblemen.

In den US-Patentschriften 4,927,514 und 5,441,823 werden Luft-Kathoden und Prozesse zu deren Herstellung beschrieben. Sie bestehen aus einer porösen Trägerschicht aus Kohlenstoff und hydrophobem Polymer, die mit einer aktiven.Schicht in Kontakt steht. Diese Schichten werden mit Stützstrukturen aus dünnen Metallnetzen verbunden und versintert. In der US 4,927,514 werden die aktive Schicht und die Trägerschicht noch zusätzlich mit Polymer verbunden. Nachteil der genannten Elektroden ist auch hier der geringe Anteil an offenem Porenvolumen in der Trägerschicht. Dies führt zu niedrigen Leistungswerten im Betrieb mit verdünnten Gasen, wie Luft und Reformatgas, insbesondere bei niedriger Stöchiometrie, das heißt hoher Gasausnutzung. Die eingesetzten Metallnetzstrukturen sind außerdem unter den Arbeitsbedingungen der PEM-Brennstoffzellen der Korrosion unterworfen.

Es war daher die Aufgabe der vorliegenden Erfindung, verbesserte Gasverteilerstrukturen und Gasdiffusionselektroden für Polymerelektrolyt-Brennstoffzellen sowie Verfahren zu ihrer Herstellung bereitzustellen, die die beschriebenen Nachteile des Standes der Technik vermeiden.

Diese Aufgabe wird durch eine Gasverteilerstruktur für Polymerelektrolyt-Brennstoffzellen gelöst, welche einen hydrophobierten, blattförmigen Kohlenstoffträger mit einer Dicke von 100 bis 400 µm enthält, der von zwei Oberflächen begrenzt wird. Die Gasverteilerstruktur enthält auf einer der beiden Oberflächen des Kohlenstoffträgers eine Kontaktschicht mit einer Dicke von 5 bis 100 mm aus einer innigen Mischung aus wenigstens einem hydrophoben Polymer und feinteiligen Kohlenstoffpartikeln mit einem Anteil der Kohlenstoffpartikel am Gesamtgewicht der Kontaktschicht von 40 bis 90 Gew.-%, wobei das hydrophobe Polymer ausgewählt ist aus der Gruppe Polyethylen, Polypropylen und Polytetrafluorethylen. Die Gasverteilerstruktur ist dadurch gekennzeichnet, daß die Hydrophobierung des Kohlenstoffträgers aus wenigstens einem hydrophoben Polymer besteht und auf zwei Schichten beschränkt ist, die jeweils von den beiden Oberflächen des Kohlenstoffträgers bis in eine Tiefe von 5 bis 40 µm reichen und das Porenvolumen des Kohlenstoffträgers im Bereich der hydrophoben Schichten zu 40 bis 60 % ausfüllt.

Der Kohlenstoffträger der Gasverteilerstruktur wird durch ein makroporöses Kohlefasersubstrat mit einer Schichtdicke zwischen 100 und 400 µm gebildet, welches eine unregelmäßige Struktur aufweisen oder aber auch gewebt sein kann.

Die beiden hydrophoben Schichten enthalten wenigstens ein hydrophobes Polymer ausgewählt aus der Gruppe Polyethylen, Polypropylen und Polytetrafluorethylen. Altemativ zu den genannten hydrophoben Polymeren können auch andere organische oder anorganische, hydrophobe Materialien eingesetzt werden. Die Dicke der hydrophoben Schichten beträgt 5 bis 40 µm, bevorzugt 10 bis 20 µm. Für bestimmte Anwendungsfälle kann die Schichtdicke der hydrophoben Schicht auf Anoden- und Kathodenseite unterschiedlich sein. So ist es für den Betrieb des Brennstoffzellensystems nahe Atmosphärendruck vorteilhaft, auf der Anode eine Schichtdicke von 10 bis 25 µm und auf der Kathode von 5 bis 15 µm zu haben.

Das hydrophobe Polymer oder die Polymermischung wird zur Bildung der hydrophoben Schichten von den Oberflächen des Kohlenstoffträgers bis in die gewünschte Tiefe in die Poren des Trägers eingebracht, wobei das hydrophobe Polymer das Porenvolumen des Kohlenstoffträgers im Bereich der hydrophoben Schichten zu 40 bis 60% ausfüllt. Hierbei ist es nicht notwendig, dem hydrophoben Polymer Kohlenstofffasern oder Kohlenstoffpartikel zuzusetzen, da die elektrische Leitung von den Fasern des Kohlenstoffträgers übernommen wird.

Als Kontaktschicht wird im Rahmen dieser Erfindung diejenige Schicht der Gasverteilerstruktur verstanden, die in der Brennstoffzelle mit der Elektrodenschicht in Kontakt steht. Die Kontaktschicht enthält eine innige Mischung aus wenigstens einem hydrophoben Polymer und feinteiligen Kohlenstoffpartikeln, wobei der Anteil der Kohlenstoffpartikel am Gesamtgewicht der Kontaktschicht 40 bis 90 Gew.-% beträgt. Als hydrophobe Materialien für die Kontaktschicht können dieselben Materialien wie für die hydrophoben Schichten eingesetzt werden. Die Dicke der Kontaktschicht beträgt zwischen 5 und 100 µm.

Die beschriebene Gasverteilerstruktur kann zur Herstellung von Gasdiffusionselektroden und von kompletten Membran-Elektrodeneinheiten verwendet werden. Zur Herstellung einer Gasdiffusionselektrode wird auf die Kontaktschicht der Gasverteilerstruktur eine Elektrodenschicht aufgebracht, die einen Elektrokatalysator enthält. Solche Elektrodenschichten sind zum Beispiel in den deutschen Patentanmeldungen DE 196 11 510 A1, DE 198 12 592 und DE 198 37 669 beschrieben. Sie bestehen zumeist aus einem Ionomer und einem darin dispergierten Elektrokatalysator. Je nach dem, ob eine Anode oder Kathode hergestellt werden soll, muss ein entsprechender Katalysator eingesetzt werden. Die in den genannten Patentanmeldungen beschriebenen ElektrodenSchichten sind ebenfalls porös mit einer Porosität zwischen 40 und 70 %. Ihre Dicke beträgt zwischen 5 und 100 µm.

Eine komplette Membran-Elektrodeneinheit einer Brennstoffzelle enthält eine Polymerelektrolyt-Membran mit beidseitig aufgebrachten Gasdiffusionselektroden.

Die erfindungsgemäße Gasverteilerstruktur und die daraus aufgebauten Gasdiffusionselektroden und Membran-Elektrodeneinheiten ermöglichen einen guten Zugang der Reaktivgase zu den katalytisch aktiven Zentren der Membran-Elektrodeneinheit, eine effektive Befeuchtung des Ionomers in den Katalysatorschichten und der Membran und den problemlosen Abtransport des Reaktionsprodukts Wasser von der Kathodenseite der Membran-Elektrodeneinheiten.

Die Kontaktschicht weist eine feine Porenstruktur mit Porendurchmessern von unter 10 µm auf. Dadurch wird ein optimaler Transport der Reaktivgase gewährleistet. Die feinen Poren können aufgrund ihrer hydrophoben Natur und ihres kleinen Porendurchmessers nicht mit kondensiertem Wasser geflutet werden, was den Gastransport behindern würde.

Besonders wichtig sind die beiden hydrophoben Schichten der Gasverteilerstruktur. Sie verhindern, dass flüssiges Wasser in den grobporigen Kohlenstoffträger eindringt und sein Porensystem flutet.

Zur Herstellung der erfindungsgemäßen Gasverteilerstrukturen können kommerzielle, grobporige Kohlefasersubstrate verwendet werden. Es gibt verschiedene Substratmaterialien, die sich in Struktur, Herstellungsverfahren und Eigenschaften unterscheiden. Beispiele für solche Materialien sind Toray-Papier oder das gewebte Kohlefaservlies AvCarb 1071 HCB von Textron Inc.

Zur Herstellung der erfindungsgemäßen Gasverteilerstrukturen werden die grobporigen Kohlefasersubstrate in einem ersten Arbeitsschritt an der Ober- und Unterseite mit den hydrophoben Schichten versehen. Das kann auf verschiedene Art und Weise geschehen.

Zur Einbringung der hydrophoben Schichten in den Kohlenstoffträger kann er zum Beispiel nacheinander auf jeder Seite mit einer Paste aus einem pulverförmigen, hydrophoben Polymer und einer flüssigen Phase beschichtet und getrocknet werden. Bei der flüssigen Phase kann es sich um Wasser oder um organische Flüssigkeiten oder Mischungen davon handeln. Nach dem letzten Trocknungsvorgang liegt eine dreischichtige Struktur vor, die zur Versinterung und Einbringung des Polymers bis zur gewünschten Tiefe in den Kohlenstoffträger calciniert wird, das heißt die Struktur wird bis über den Schmelzpunkt des gewählten Polymers erhitzt. Dies kann zum Beispiel bei Einsatz von PTFE durch Erhitzen auf über 330° C erreicht werden.

Zur Beschichtung des Kohlenstoffträgers mit der Paste eignen sich zum Beispiel Rakelverfahren oder andere Auftragstechniken. Nach der Versinterung des Polymers wird abschließend auf eine der beiden hydrophoben Schichten die Kontaktschicht unter Verwendung einer Tinte, welche ein hydrophobes Polymer und feine Kohlenstoffpartikel enthält, aufgebracht, getrocknet und erneut calciniert.

Eine weitere Möglichkeit zur Aufbringung der hydrophoben Schichten ist die Verbindung der Oberflächen des Kohlenstoffträgers mit grobporigen Vliesen oder dünnen Folien aus hydrophobem Polymer. Die Folien werden auf beide Seiten des Kohlenstoffträgers aufgelegt und dann durch Anwendung von Druck und Hitze mit dem Kohlenstoffträger verbunden. Dabei wird durch Auswahl geeigneter Parameter eine ausreichend hydrophobe Schicht mit der gewünschten Porosität hergestellt. Beim Einsatz von PTFE kann dies durch kurzzeitiges Erhitzen auf über 330°C erreicht werden. Dabei ist es günstig, die aufgelegten Folien während dieses Prozeßschrittes zu fixieren.

Weiterhin kann eine gezielte Oberflächen-Imprägnierung mit Lösungen oder Dispersionen von hydrophobem Polymer durchgeführt werden. Der imprägnierte Kohlenstoffträger wird unter freiem Luftzutritt zu seinen beiden Oberflächen und unter starkem Luftaustausch bei Temperaturen bis 250° C getrocknet. Besonders bevorzugt ist die Trocknung in einem Umlufttrockenschrank bei 60 bis 220, bevorzugt bei 80 bis140° C. Beide Oberflächen der Kohlefasersubstrate müssen dabei für die Umluft zugänglich sein. Dadurch kommt es zu einer Fixierung des hydrophoben Polymers nahe den beiden Oberflächen des Kohlefasersubstrates, besonders innerhalb der ersten 20 µm an beiden Seiten des Substrates.

Die mit den beschriebenen Verfahren herstellbaren hydrophoben Schichten reichen von jeder Oberfläche des Kohlenstoffträgers ausgehend bis in eine gewisse Tiefe in den Träger hinein und füllen dabei seine Poren zum Teil aus. Durch geeignete Wahl der Verfahrensparameter (verwendetes Polymermaterial, Menge des aufgebrachten Polymermaterials, Calciniertemperatur und Calcinierdauer) kann die Eindringtiefe der Schichten auf einen Wert zwischen 5 und 40 µm festgelegt werden. Bevorzugt werden Schichtdikken zwischen 10 und 20 µm gewählt. Erfahrungsgemäß werden die Poren des Kohlenstoffträgers im Bereich der hydrophoben Schichten mit den beschriebenen Verfahren zu 40 bis 60% mit Polymer gefüllt.

Zur Herstellung der Kontaktschicht wird eine auftragbare Dispersion von Leitfähigkeitsrußen oder Graphit mit hydrophoben Polymeren hergestellt. Die flüssige Phase dieser Dispersion kann zum Beispiel eine Mischung aus einem organischen Lösungsmittel und Wasser sein. Eine solche Dispersion wird im folgenden auch als Tinte bezeichnet. Geeignete Ruße oder Graphite für diesen Zweck sind zum Beispiel Vulcan XC72 von Cabot oder HSAG 300 von Timcal. Als hydrophobe Polymere eignen sich auch hier Polyethylen, Polypropylen, Polytetrafluorethylen oder andere organische oder anorganische, hydrophobe Materialien. Bewährt haben sich Polytetrafluorethylen oder Polypropylen. Der Kohlenstoffanteil in der Tinte liegt je nach Anwendung zwischen 40 und 90 Gew.-%, bezogen auf das Gesamtgewicht aus Kohlenstoff und Polymer. Die rheologischen Eigenschaften der Tinte können durch geeignete Additive an das jeweilige Auftragsverfahren angepasst werden.

Nach Vereinigung der Komponenten wird die Tinte homogenisiert. Dabei können bekannte Hilfsmittel zum Einsatz kommen, wie zum Beispiel Hochgeschwindigkeitsrührer, Ultraschallbäder oder Dreiwalzwerke.

Die homogenisierte Mischung kann mittels verschiedener Techniken auf die oben beschriebene dreischichtige Struktur aufgebracht werden. Hierzu gehören zum Beispiel das Sprühen, Pinseln, Streichen oder Drucken.

Die aufgebrachte Schicht wird bei Temperaturen zwischen 60 und 140, bevorzugt zwischen 80 und 120° C, getrocknet. In einem weiteren thermischen Behandlungsschritt wird die Schicht calciniert, um das in der Schicht enthaltene hydrophobe Polymer zu versintern und rheologische Additive und Porenbildner auszubrennen. Im Falle von Polytetrafluorethylen liegt die Sintertemperatur oberhalb von 330° C. Beim Einsatz von anderen hydrophoben Polymeren sind die Behandlungstemperaturen entsprechend anzupassen.

Die Kontaktschicht weist Schichtdicken zwischen 5 und 100, bevorzugt zwischen 10 und 30 µm auf. Unterhalb einer Dicke von 5 µm wird die Schicht aufgrund ihrer porösen Struktur unregelmäßig. Daraus resultiert eine verminderte elektrische Leitfähigkeit. Oberhalb von 60 µm wird der Gastransport durch den langen Diffusionsweg zu langsam. Für die häufigsten Anwendungsfälle haben sich Schichtdicken zwischen 10 und 30 µm besonders bewährt.

Die folgenden Beispiele und Figuren verdeutlichen das Wesen der Erfindung. Es zeigen:
- **Figur 1:**: Schematische Darstellung der erfindungsgemäßen Gasverteilerstruktur
- **Figur 2:**: Zellspannung in Abhängigkeit von der Stromdichte bei Luftbetrieb für die MEE von Beispiel 1, Beispiel 2 und Vergleichsbeispiel 1(VB 1)

Die Beispiele 1 - 2 beschreiben die Herstellung von erfindungsgemäßen Gasverteilerstrukturen und damit hergestellten Membran-Elektrodeneinheiten.

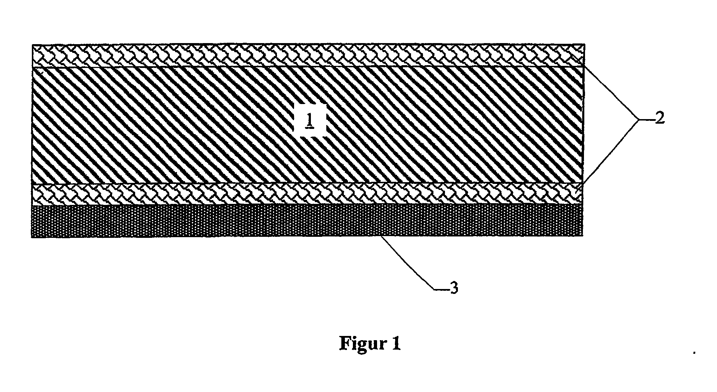

Figur 1 zeigt einen schematischen Querschnitt durch eine erfindungsgemäße Gasverteilerstruktur. (1) bezeichnet den blattförmigen, grobporigen Kohlenstoffträger. Er weist auf jeder Seite eine hydrophobe Schicht (2) auf. Die Schichten (2) können entweder von den beiden Oberflächen des Kohlenstoffträgers ausgehend bis in eine gewünschte Tiefe in den Kohlenstoffträger eingebracht oder als diskrete Schichten auf die Oberflächen des Kohlenstoffträgers aufgebracht sein. Eine der beiden hydrophoben Schichten trägt die Kontaktschicht (3).

### Vergleichsbeispiel 1 (VB1):

Es wurde eine Brennstoffzelle entsprechend CA 2,052,221 hergestellt.

Kohlefaserpapier mit einer Porosität von 74,1 % und einer Dicke von 200 µm (TGP-H-060 von Toray Inc., Japan) wurde in eine wäßrige PTFE-Dispersion (Hostaflon TF 5032 von Dyneon, Gendorf) getaucht. Nach 10 Minuten wurde das Material herausgenommen. Nach dem Ablaufen der oberflächlich anhaftenden Dispersion wurde das Kohlefaserpapier 10 bis 15 Minuten lang an der Luft getrocknet. Zum Verschmelzen des in die Struktur eingebrachten PTFE wurde das imprägnierte Kohlefaserpapier auf einer heißen Stahlplatte 10 bis 15 Sekunden lang gesintert. Die Temperatur der Platte lag in einem Bereich von 350 bis 410°C.

Durch Anpassen der PTFE-Konzentrationen in der Dispersion wurden Kohlefaserpapiere mit einem PTFE-Gehalt von 9,3 Gew.-% für die Anode und 4,5 Gew.-% für die Kathode einer Brennstoffzelle hergestellt.

### Beispiel 1:

Es wurden Anoden-Gasverteilerstrukturen und Kathoden-Gasverteilerstrukturen gemäß der vorliegenden Erfindung angefertigt und zu kompletten Membran-Elektrodeneinheiten verarbeitet.

Als Basis für die Gasverteilerstrukturen diente wie in Vergleichsbeispiel 1 Kohlefaserpapier mit einer Porosität von 74,1 % und einer Dicke von 200 µm (TGP-H-060 von Toray Inc., Japan). Zur Aufbringung der hydrophoben Schichten wurden 5 g PTFE-Pulver Hostaflon TF1740 (Dyneon, Gendorf) mit einer mittleren Korngröße von 25 µm mit 1 g Shellsol D70 (Fa. Shell) angeteigt. Die Mischung wurde durch Rühren zu einer streichfähigen Masse verarbeitet und mit einem Rakel auf eine der Oberflächen des Kohlefaserpapiers aufgebracht. Dann wurde das beschichtete Kohlefaserpapier im Umlufttrockenschrank bei 100°C getrocknet. Anschließend wurde die Rückseite nach dem selben Verfahren beschichtet.

Zum Verschmelzen des aufgebrachten PTFE wurde das Kohlefaserpapier in einem Kammerofen bei 340-350° C ca. 15 Minuten lang gesintert. Die dabei erhaltenen Kohlefaserpapiere wiesen nach der Behandlung eine Flächenbeladung von 21,15 g PTFE/m² auf. Diese so beschichteten Kohlefaserpapiere dienten im weiteren als Substrate für Anoden-Gasverteilerstrukturen.

Zur Anfertigung von Substraten für Kathoden-Gasverteilerstrukturen wurde die Menge von Shellsol D70 auf 2 g verdoppelt. Dabei wurden Kohlefaserpapiere mit einer Flächenbeladung von 10,63 g PTFE/m² erhalten.

Zur Aufbringung der Kontaktschichten wurden Tinten entsprechend den nachfolgenden Rezepturen hergestellt:

**Tabelle 1:**

| **Tinte 1 für die Kontaktschicht der Anoden-Gasverteilerstruktur** | |
|---|---|
| 12,88 g | Ruß XC72 (Cabot Inc., USA) |
| 52,52 g | Dipropylenglykol |
| 25,16 g | 16,7 %-ige Lösung von Mowital B20H (Clariant, Kelsterbach) in Dipropylenglykol-n-butylether |
| 9,08 g | Hostaflon TF5032 (Dyneon, Gendorf) |
| 0,36 g | VE-Wasser |

**Tabelle 2:**

| **Tinte 2 für die Kontaktschicht der Kathoden-Gasverteilerstruktur** | | |
|---|---|---|
| 12,65 g | Ruß XC72 (Cabot Inc., USA) | |
| 50,48 g | Dipropylenglykol | |
| 24,37 g | 16,7 %-ige Lösung von Mowital B20H (Clariant, Kelsterbach) in Dipropylenglykol-n-butylether | |
| 2,95 g | Polyethylenoxid M=300000 (Aldrich, Karlsruhe) | |
| 9,22 g | Hostaflon TF5032 (Dyneon, Gendorf) | |
| 0,32 g | VE-Wasser | |

Die Bestandteile der jeweiligen Tinten gemäß den obigen Rezepten wurden in eine Porzellanschale eingewogen und mit einem Flügelrührer vordispergiert. Die Homogenisierung erfolgte mit Hilfe eines Dreiwalzwerks. Die Viskosität der Tinten wurde mit einem Haake-Rotations-Viskosimeter RV20 bei 100 s⁻¹ gemessen.

**Tabelle 3:**

| Eigenschaften der fertigen Tinten | | |
|---|---|---|
| | Tinte 1 | Tinte 2 |
| Viskosität bei 100/s [Pa s] | 1,1 | 10,5 |
| Trockenrückstand [Gew.-%] | 22,5 | 25,2 |

Die oben beschriebenen Tinten für Anoden- und Kathoden-Gasverteilerstruktur wurden im Siebdruckverfahren auf eine der beiden hydrophoben Schichten der Kohlefaserpapiere aufgebracht und anschließend bei 100° C getrocknet. Die beschichtete Fläche betrug 50 cm². Dieser Vorgang wurde so lange wiederholt, bis die Struktur des Kohlefaserpapiers bedeckt war.

Anschließend wurden die Gasverteilerstrukturen eine Stunde lang in einem Muffelofen bei 390° C behandelt. Dabei nahm das Gewicht der aufgebrachten Kontaktschicht um 18,5 % im Falle der Anoden-Gasverteilerstrukturen und 28,5 % im Falle der Kathoden-Gasverteilerstrukturen ab. Die Beladung der Substrate mit der calcinierten Kontaktschicht betrug 2,5 mg/cm². Die Schichtdicke war 15 bis 20 µm.

Mikroskopische Aufnahmen der Gasverteilerstrukturen zeigen, dass sich auf beiden Seiten der grobporigen Schicht eine hydrophobe Schicht befindet, die als Hauptbestandteil PTFE enthält. Die Dicke dieser Schicht beträgt 12 bis 15 µm im Falle der Anodengasverteilerstruktur und 5 bis 10 µm im Falle der Kathodengasverteilerstruktur.

Entsprechend dieser Schichtstärke kann der Anteil des PTFE in der hydrophoben Schicht mit Hilfe des Flächengewichts und der PTFE-Beladung des Kohlefasersubstrats zu 54 - 58 Gew.-% berechnet werden. Die Schichten enthalten noch Anteile aus faserförmigem Kohlenstoff, die für die elektrische Kontaktierung sorgen, und ausreichend Poren, die Gastransport zulassen. Entsprechend der Flächenbeladung an PTFE, den ermittelten Schichtstärken und der Dichte von PTFE (2,0 g/cm³) haben die hydrophoben Schichten eine Restporosität von etwa 53% des ursprünglichen Porenvolumens.

### Beispiel 2:

In einer zweiten Versuchsserie wurden die hydrophoben Schichten nach einem alternativen Verfahren in den Kohlenstoffträger eingebracht. Statt der Beschichtung des Kohlenstoffträgers mit einer Paste eines hydrophoben Polymers wurden PTFE-Folien auf die Oberflächen des Kohlenstoffträgers aufgelegt.

Als Kohlenstoffträger diente wieder das schon in Beispiel 1 verwendete Kohlefaserpapier mit einer Porosität von 74,1 % und einer Dicke von 200 µm (TGP-H-060 von Toray Inc., Japan). Es wurde auf jeder Seite mit je einer 0,030 mm dicken Folie aus porösem ePTFE (Dichte: 0,38 g/cm³, TETRATEX von W.L. Gore & Associates) zusammengebracht und das ganze mehrschichtige Gebilde zwischen zwei Edelstahlblechen (Stärke 1 mm) befestigt. Das so vorbereitete Paket wurde in einem Kammerofen bei 340-350° C ca. 15 Minuten lang gesintert. Anschließend wurden die Edelstahlplatten entfernt. Die dabei erhaltenen Kohlefaserpapiere wiesen nach der Behandlung eine Flächenbeladung von 17 g PTFE/m² auf. Diese Kohlefaserpapiere dienten im weiteren als Substrate für Anoden-Gasverteilerstrukturen.

Der gleiche Versuch wurde mit zwei ePTFE Folien mit einer Dicke von 0,015 mm (Dichte: 0,38 g/cm³, TETRATEX von W.L. Gore & Associates) wiederholt. Dabei wurden Kohlefaserpapiere mit einer Flächenbeladung von 9,3 g PTFE/m² erhalten. Diese Kohlefaserpapiere dienten im weiteren als Substrate für Kathoden-Gasverteilerstrukturen.

Die in Beispiel 1 beschriebenen Tinten für die Kontaktschichten der Anoden- und Kathoden-Gasverteilerstrukturen wurden im Siebdruckverfahren auf die mit den hydrophoben Schichten versehenen Kohlefaserpapiere aufgebracht und anschließend bei 100° C getrocknet. Die beschichtete Fläche betrug 50 cm². Dieser Vorgang wurde so lange wiederholt, bis die Struktur des Kohlefaserpapiers bedeckt war.

Anschließend wurden die Gasverteilerstrukturen eine Stunde lang in einem Muffelofen bei 390° C behandelt. Dabei nahm das Gewicht der aufgebrachten Kontakschicht um 18,5 % im Falle der Anoden-Gasverteilerstrukturen und 28,5 % im Falle der Kathoden-Gasverteilerstrukturen ab. Die Beladung der Substrate mit der calcinierten Kontaktschicht betrug 2,5 mg/cm². Die Schichtdicke war 15-20 µm.

Mikroskopische Aufnahmen der Gasverteilerstrukturen zeigen, dass sich auf beiden Seiten der grobporigen Schicht eine hydrophobe Schicht befindet, die als Hauptbestandteil PTFE enthält. Die Dicke diese Schicht ist 10 - 15 µm im Falle der Anodengasverteilerstruktur und 5 - 8 µm im Falle der Kathodengasverteilerstruktur. Entsprechend dieser Schichtstärke kann der Anteil des PTFE in der hydrophoben Schicht mit Hilfe des Flächengewichts und der PTFE-Beladung des Kohlefasersubstrats zu 58 Gew.% berechnet werden. Die Schichten enthalten noch Anteile aus faserförmigem Kohlenstoff, die für die elektrische Kontaktierung sorgen, und ausreichend Poren, die Gastransport zulassen. Entsprechend der Flächenbeladung an PTFE, den ermittelten Schichtstärken und der Dichte von PTFE (2,0 g/cm³) haben die hydrophoben Schichten eine Restporosität von etwa 54-58% des ursprünglichen Porenvolumens.

### Elektrochemische Prüfungen

Die nach Vergleichsbeispiel 1 und Beispiel 1 und 2 hergestellten Anoden- und Kathoden-Gasverteilerstrukturen wurden zusammen mit einer mit Katalysator beschichteten Membran, die entsprechend der Vorschrift aus US-PS 5,861,222, Vergleichsbeispiel 1 hergestellt wurde, in eine Brennstoffzellen-Prüfzelle mit einer aktiven Zellenfläche von 50 cm² eingebaut. Die Beladung der mit Katalysator beschichteten Membran und weitere technische Daten sind in der folgenden Tabelle angegeben:

**Tabelle 5:**

| | |
|---|---|
| Membran | Nafion 112 |
| Anodenkatalysator | 40% PtRu(1:1) auf Vulcan XC72 |
| Pt-Beladung (Anode) | 0,3 mg/cm² |
| Kathodenkatalysator | 40% Pt auf Vulcan XC72 |
| Pt-Beladung (Kathode) | 0,4 mg/cm² |

Bei den Leistungstests wurde als Anodengas eine Gasmischung von 45% H₂, 31% N₂, 21% CO₂, 50 ppm CO mit einem Airbleed von 3% Luft eingesetzt. Als Kathodengas wurde Luft eingesetzt. Die Zelltemperatur betrug 75°C. Der Druck der Arbeitsgase war 1 bar (absolut). Die Stöchiometrie der Gase war 1,1 (Anodengas) und 2,0 (Kathodengas).

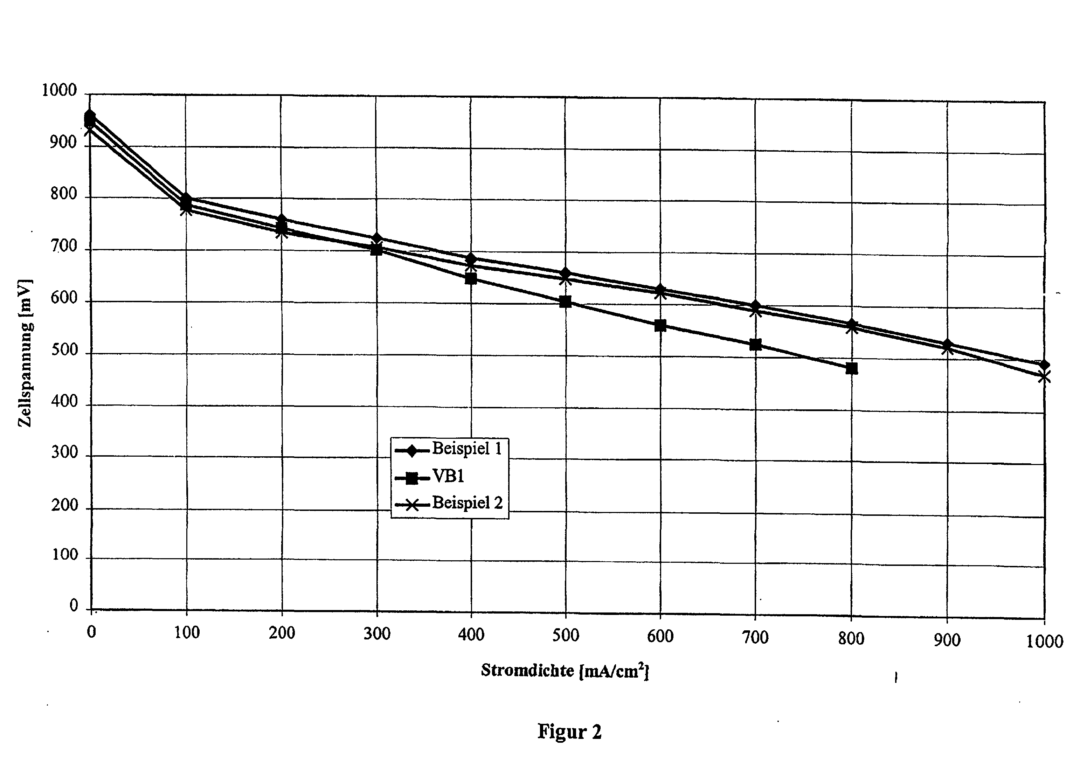

Die gemessenen Zellspannungen im Luftbetrieb in Abhängigkeit von der Stromdichte sind beispielhaft in Figur 2 für die Zellen von Vergleichsbeispiel 1 und Beispiel 1 und 2 dargestellt. Man erkennt, dass die Membran-Elektrodeneinheiten mit den erfindungsgemäßen Gasverteilerstrukturen eine deutlich verbesserte elektrische Leistung im Vergleich zum Stand der Technik (VB1) liefern.

Tabelle 6 zeigt die bei einer Belastung der Zellen mit einer Stromdichte von 600 mA/cm² gemessenen Zellspannungen.

**Tabelle 6:**

| Zellspannungen im Reformat/Luftbetrieb bei 600 mA/cm² | |
|---|---|
| Beispiel | Zellspannung [mV] |
| Vergleichsbeispiel 1 | 560 |
| Beispiel 1 | 629 |
| Beispiel 2 | 622 |

## Patentansprüche

1. Gasverteilerstruktur für Polymerelektrolyt-Brennstoffzellen enthaltend einen hydrophobierten, blattförmigen Kohlenstoffträger mit einer Dicke von 100 bis 400 µm, der von zwei Oberflächen begrenzt wird, sowie eine Kontaktschicht mit einer Dicke von 5 bis 100 µm auf einer der beiden Oberflächen des Kohlenstoffträgers aus einer innigen Mischung aus wenigstens einem hydrophoben Polymer und feinteiligen Kohlenstoffpartikeln mit einem Anteil der Kohlenstoffpartikel am Gesamtgewicht der Kontaktschicht von 40 bis 90 Gew.-%, wobei das hydrophobe Polymer ausgewählt ist aus der Gruppe Polyethylen, Polypropylen und Polytetrafluorethylen,
**dadurch gekennzeichnet,**
**daß** die Hydrophobierung des Kohlenstoffträgers aus wenigstens einem hydrophoben Polymer besteht und auf zwei Schichten beschränkt ist, die jeweils von den beiden Oberflächen des Kohlenstoffträgers bis in eine Tiefe von 5 bis 40 µm reichen und das Porenvolumen des Kohlenstoffträgers im Bereich der hydrophoben Schichten zu 20 bis 60% ausfüllt.

2. Gasverteilerstruktur nach Anspruch 1,
**dadurch gekennzeichnet,**
**daß** die beiden hydrophoben Schichten wenigstens ein hydrophobes Polymer ausgewählt aus der Gruppe Polyethylen, Polypropylen und Polytetrafluorethylen enthalten.

3. Gasdiffusionselektrode für Brennstoffzellen aus einer Gasverteilerstruktur und einer Elektrodenschicht,
**dadurch gekennzeichnet,**
**daß** sie eine Gasverteilerstruktur nach einem der vorstehenden Ansprüche enthält und die Elektrodenschicht auf die Kontaktschicht der Gasverteilerstruktur aufgebracht ist.

4. Membran-Elektrodeneinheit für Brennstoffzellen aus einer Polymerelektrolyt-Membran und beidseitig aufgebrachten Gasdiffusionselektroden,
**dadurch gekennzeichnet,**
**daß** die Membran-Elektrodeneinheit wenigstens eine Gasdiffusionselektrode nach Anspruch 3 enthält.

5. Polymerelektrolyt-Brennstoffzelle,
**dadurch gekennzeichnet,**
**daß** sie eine Membran-Elektrodeneinheit nach Anspruch 4 enthält.

6. Verfahren zur Herstellung einer Gasverteilerstruktur nach Anspruch 1,
**dadurch gekennzeichnet,**
**dass** der Kohlenstoffträger nacheinander auf jeder Seite mit einer Paste aus einem pulverförmigen, hydrophoben Polymer und einer flüssigen Phase beschichtet und getrocknet wird und die so gebildete dreischichtige Struktur anschließend zur Versinterung des hydrophoben Polymers calciniert wird und dass danach auf eine der beiden hydrophoben Schichten die Kontaktschicht unter Verwendung einer Tinte, welche ein hydrophobes Polymer und feine Kohlenstoffpartikel enthält, aufgebracht, getrocknet und erneut calciniert wird, wobei es sich bei der flüssigen Phase der Paste um Wasser oder um organische Flüssigkeiten oder Mischungen davon handelt.

7. Verfahren zur Herstellung einer Gasverteilerstruktur nach Anspruch 1,
**dadurch gekennzeichnet,**
**daß** auf beide Seiten des Kohlenstoffträgers eine dünne Folie aus hydrophobem Polymer aufgelegt und durch Anwendung von Druck und Hitze mit dem Kohlenstoffträger verbunden wird und daß danach auf eine der beiden hydrophoben Schichten die Kontaktschicht unter Verwendung einer Tinte, welche ein hydrophobes Polymer und feine Kohlenstoffpartikel enthält, aufgebracht, getrocknet und erneut calciniert wird.

8. Verfahren zur Herstellung einer Gasverteilerstruktur nach Anspruch 1,
**dadurch gekennzeichnet,**
**daß** der Kohlenstoffträger mit einer ein hydrophobes Polymer enthaltenden Dispersion imprägniert und danach unter freiem Luftzutritt zu seinen beiden Oberflächen getrocknet und anschließend zur Versinterung des Polymers calciniert wird und daß danach auf eine der beiden hydrophoben Schichten die Kontaktschicht unter Verwendung einer Tinte, welche ein hydrophobes Polymer und feine Kohlenstoffpartikel enthält, aufgebracht, getrocknet und erneut calciniert wird.

## Claims

1. A gas distribution structure for polymer electrolyte fuel cells comprising a hydrophobic foliated carbon substrate with a thickness of 100 to 400 µm and being limited by two surfaces as well as a contact layer that has a thickness of 5 to 100 µm and consists of an intimate mixture of at least one hydrophobic polymer and finely divided carbon particles on one of the two faces of the carbon substrate, the proportion of the carbon particles with respect to the total weight of the contact layer amounting to 40 to 90 wt.% and the hydrophobic polymer being selected from the group of polyethylene, polypropylene and polytetrafluoroethylene,
**characterised in that**
the carbon substrate is made hydrophobic by at least one hydrophobic polymer that is restricted to two layers extending from the two surfaces of the carbon substrate down to a depth to 5 to 40 µm and fills 20 to 60% of the pore volume of the carbon substrate in the region of the hydrophobic layers.

2. The gas distribution structure according to claim 1,
**characterised in that**
the two hydrophobic layers comprise at least one hydrophobic polymer selected from the group of polyethylene, polypropylene and polytetrafluoroethylene.

3. A gas diffusion electrode for fuel cells made of a gas distribution structure and an electrode layer,
**characterised in that**
it comprises a gas distribution structure according to any of the preceding claims and the electrode layer is applied to the contact layer of the gas distribution structure.

4. A membrane electrode assembly for fuel cells made of a polymer electrolyte membrane and gas diffusion electrodes applied to both sides,
**characterised in that**
the membrane electrode assembly comprises at least one gas diffusion electrode according to claim 3.

5. A polymer electrolyte fuel cell
**characterised in that**
it comprises a membrane electrode assembly according to claim 4.

6. A process for producing a gas distribution structure according to claim 1,
**characterised in that**
the each side of the carbon substrate is successively coated with a paste of a powdered hydrophobic polymer and a liquid phase and then dried, the resulting three-layer structure is then calcined in order to sinter the hydrophobic polymer and, subsequently, a contact layer is applied to one of the two hydrophobic layers using an ink that comprises a hydrophobic polymer and fine carbon particles, dried and again calcined, the liquid phase of the paste being water, organic liquids or mixtures thereof.

7. A process for producing a gas distribution structure according to claim 1,
**characterised in that**
a thin film of hydrophobic polymer is laid on both sides of the carbon substrate and subjected to pressure and heat to bond them with the carbon substrate and then the contact layer is applied to one of the two hydrophobic layers using an ink that comprises a hydrophobic polymer and fine carbon particles, dried and again calcined.

8. A process for producing a gas distribution structure according to claim 1,
**characterised in that**
the carbon substrate is impregnated with a dispersion comprising a hydrophobic polymer, dried while allowing air to access both surfaces freely and subsequently calcined to sinter the polymer and, subsequently, the contact layer is applied to one of the two hydrophobic layers using an ink that comprises a hydrophobic polymer and fine carbon particles, dried and again calcined.

## Revendications

1. Structure de distributeurs de gaz pour des piles à combustibles comprenant un support en carbone hydrophobisé, sous la forme d'une feuille d'une épaisseur de 100 à 400 µm délimitée par deux faces avec, sur l'une d'elles, une couche de contact d'une épaisseur de 5 à 100 µm faite d'un mélange intime d'un polymère hydrophobe et de fines particules de carbone représentant 40 à 90 % en poids de la couche de contact, le polymère hydrophobe étant choisi dans le groupe du polyéthylène, du polypropylène et du polytétrafluoréthylène,
**caractérisée en ce que**
l'hydrophobisation du support en carbone est réalisée au moyen d'au moins un polymère hydrophobe et elle est limitée à deux couches dont chacune part de la surface correspondante du support pour pénétrer jusqu'à une profondeur de 5 à 40 µm, le volume des pores du support étant rempli de 20 % à 60 % dans la zone des couches hydrophobes.

2. Structure de distributeur de gaz selon la revendication 1,
**caractérisée en ce que**
les deux couches hydrophobes contiennent au moins un polymère hydrophobe choisi dans le groupe polyéthylène, polypropylène et polytétrafluoréthylène.

3. Electrode à diffusion gazeuse pour des piles à combustible, composées d'une structure de distributeur de gaz et d'une couche d'électrode,
**caractérisée en ce que**
l'électrode présente une structure de distributeurs de gaz selon l'une quelconque des revendications précédentes et la couche d'électrode est disposée sur la couche de contact de cette structure.

4. Ensemble à membrane d'électrode pour piles à combustible, composée d'une membrane portant sur ses deux faces des électrodes à diffusion de gaz,
**caractérisé en ce que**
l'ensemble à membrane contient au moins une électrode à diffusion de gaz selon la revendication 3.

5. Pile à combustible à électrolyte polymère,
**caractérisée en ce qu'**
elle contient un ensemble à membrane selon la revendication 4.

6. Procédé de fabrication d'une structure à distributeurs de gaz selon la revendication 1,
**caractérisé en ce que**
le support en carbone est enduit successivement sur chacun de ses côtés au moyen d'une pâte constituée d'un polymère hydrophobe en poudre et d'une phase liquide et la structure à trois couches ainsi formée est calcinée ensuite pour fritter le polymère hydrophobe puis, sur une des deux couches hydrophobes, on dépose la couche de contact en utilisant une encre contenant un polymère hydrophobe et de fines particules de carbone, on sèche et on calcine à nouveau, étant précisé que la phase liquide de la pâte est de l'eau, ou des liquides organiques ou des mélanges de ceux-ci et d'eau.

7. Procédé de fabrication d'une structure à distributeur de gaz selon la revendication 1,
**caractérisé en ce qu'**
on dépose sur ses deux côtés du support en carbone une feuille mince d'un polymère hydrophobe que l'on lie au support par l'action de la pression et de la chaleur, puis, sur une des deux couches hydrophobes on dépose la couche de contact en utilisant une encre contenant un polymère hydrophobe et de fines particules de carbone, on sèche et on calcine à nouveau.

8. Procédé de fabrication d'une structure à distributeur de gaz selon la revendication 1,
**caractérisé en ce qu'**
on imprègne le support en carbone d'une dispersion contenant un polymère hydrophobe, on le sèche en amenant de l'air frais sur ses deux faces, on le calcine pour fritter le polymère et ensuite on dépose sur une des deux couches hydrophobes la couche de contact en utilisant une encre contenant un polymère hydrophobe et de fines particules de carbone, on sèche et on calcine à nouveau.
